(19) Europäisches Patentamt
European Patent Office
Office européen des brevets

(11) **EP 3 998 562 A1**

(12) **EUROPEAN PATENT APPLICATION**
published in accordance with Art. 153(4) EPC

(43) Date of publication:
**18.05.2022 Bulletin 2022/20**

(51) International Patent Classification (IPC):
**G06Q 10/06** (2012.01)     **G06Q 50/30** (2012.01)

(21) Application number: **20836905.8**

(86) International application number:
**PCT/CN2020/100777**

(22) Date of filing: **08.07.2020**

(87) International publication number:
**WO 2021/004468 (14.01.2021 Gazette 2021/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.07.2019 CN 201910620244**

(71) Applicant: **Travelsky Technology Limited**
**Beijing 101318 (CN)**

(72) Inventors:
• **BI, Zheng**
**Beijing 101318 (CN)**
• **FU, Zhifeng**
**Beijing 101318 (CN)**
• **WANG, Xiaoling**
**Beijing 101318 (CN)**
• **ZHANG, Jinwei**
**Beijing 101318 (CN)**
• **LI, Yuanyuan**
**Beijing 101318 (CN)**

(74) Representative: **Detken, Andreas**
**Isler & Pedrazzini AG**
**Giesshübelstrasse 45**
**Postfach 1772**
**8027 Zürich (CH)**

(54) **FLIGHT CABIN SEAT RESOURCE ALLOCATION METHOD AND APPARATUS**

(57)     Disclosed are a flight cabin seat resource allocation method and apparatus, which are applied to the technical field of aviation. The method comprises: after preset start information and PNR information of a target flight are acquired (S100), firstly, determining a target flight leg according to a preset flight leg priority (S110); then, comparing sold cabin seat information in the target flight leg with saleable cabin seat information in the target flight leg after the type of aircraft is changed, and determining an overflow state of the target flight leg (S120); when the target flight leg is in a state where flight overflow does not occur and cabin seat overflow occurs, for each main cabin in which overflow occurs, determining, according to the quantity of overflowed people of each main cabin in which overflow occurs and a passenger check-in state of said main cabin, overflowed passengers requiring cabin seat reallocation (S130); and allocating corresponding target cabin seats to the overflowed passengers according to a preset cabin seat mapping rule (S140). By means of the method, when passenger overflow occurs, cabin seat resources of a flight can be allocated more rationally, and cabin seats corresponding to passengers can be adjusted, such that the influence of an aircraft type change on passengers is reduced to the maximum extent.

S100 — Acquire preset startup information and passenger name record PNR information of a target flight

S110 — Determine, according to a preset flight segment priority, a target flight segment

S120 — Compare sold cabin seat information of the target flight segment with saleable cabin seat information of the target flight segment of the changed aircraft type, to determine an overflow state of the target flight segment

S130 — If the target flight segment is in a state where a flight is not overloaded and a cabin is overloaded, determine overflowed passengers who need to be reallocated with cabin seats, according to a single-cabin overflowed people quantity in an overloaded main cabin and a passenger check-in state of the overloaded main cabin

S140 — Allocate target cabin seats to the overflowed passengers according to a preset cabin seat mapping rule

**Figure 1**

## Description

This application claims priority to Chinese Patent Application No. 201910620244.2, titled "RESOURCE ALLOCATION METHOD AND APPARATUS FOR FLIGHT CABIN SEAT", filed on July 10, 2019 with the China National Intellectual Property Administration (CNIPA), which is incorporated herein by reference in its entirety.

## FIELD

The present disclosure relates to the technical field of aviation, and in particular to a resource allocation method and apparatus for flight cabin seats.

## BACKGROUND

In the daily work of airlines, due to weather changes, resource scheduling and other reasons, there will be various planned or unplanned changes to flights, and a change of an aircraft type is the one that has the greatest impact on flights among many changes.

When an aircraft type of a flight is changed, there will generally be a situation where sold cabin seats do not match saleable cabin seats that can be provided by the changed aircraft type. For example, the quantity of sold cabin seats in a first-class cabin is greater than the quantity of saleable cabin seats in the first-class cabin of the changed aircraft type. Similarly, passengers may also overflow in an economy-class cabin or a main cabin with other class.

In a case of passenger overflow, how to allocate cabin seat resource of a flight reasonably, adjust cabin seats corresponding to passengers, and minimize an impact of the aircraft type change on passengers has become an urgent technical problem to be addressed by those skilled in the art.

## SUMMARY

In view of this, an object of the present disclosure is to provide a resource allocation method and apparatus for flight cabin seats, so as to allocate cabin seat resource of the flight more reasonably, adjust cabin seats corresponding to passengers, and minimize the impact of the aircraft type change on passengers in a case of passenger overflow. The specific solutions are as follows.

In a first aspect, a resource allocation method for flight cabin seats is provided according to the present disclosure, and the method includes:

acquiring preset startup information and passenger name record PNR information of a target flight, where the preset startup information at least includes an aircraft-type change EQT message of the target flight, the EQT message at least includes saleable cabin seat information of each flight segment of a changed aircraft type, and the PNR information at least includes sold cabin seat information of each flight segment of the target flight;

determining, according to a preset flight segment priority, a target flight segment;

comparing sold cabin seat information of the target flight segment with saleable cabin seat information of the target flight segment of the changed aircraft type, to determine an overflow state of the target flight segment;

if the target flight segment is in a state where a flight is not overloaded and a cabin is overloaded, determining overflowed passengers who are in an overloaded main cabin and need to be reallocated with cabin seats, according to a single-cabin overflowed people quantity in the overloaded main cabin and a passenger check-in state of the overloaded main cabin; and

allocating corresponding target cabin seats to the overflowed passengers according to a preset cabin seat mapping rule, where the preset cabin seat mapping rule is formulated according to a preset passenger priority and classes of main cabins.

In an embodiment, if the target flight segment is in a state where the flight is overloaded and the cabin is overloaded, the resource allocation method for flight cabin seats according to the first aspect of the present disclosure further includes:

calculating a difference between a total quantity of sold cabin seats in the target flight segment and a quantity of saleable cabin seats in the target flight segment of the changed aircraft type, to acquire a quantity of people overflowed in the flight segment;

determining a quantity of unchecked-in independent passengers in the target flight segment according to the PNR information;

if the quantity of unchecked-in independent passengers is greater than or equal to the quantity of people overflowed in the flight segment, ranking the unchecked-in independent passengers from low to high according to the preset passenger priority, and allocating first L unchecked-in independent passengers to a candidate flight, so that the target flight segment is in the state where the flight is not overloaded and the cabin is overloaded, where L is the quantity of people overflowed in the flight segment.

In an embodiment, if the quantity of the unchecked-in independent passengers is less than the quantity of people overflowed in the flight segment, the resource allocation method for flight cabin seats according to the first aspect of the present disclosure further includes:
allocating all the unchecked-in independent passengers to the candidate flight.

In an embodiment, the determining the overflowed passengers who are in the overloaded main cabin and need to be reallocated with the cabin seats, according to the single-cabin overflowed people quantity in the overloaded main cabin and the passenger check-in state of the overloaded main cabin includes:

determining the single-cabin overflowed people quantity of the overloaded main cabin, according to the sold cabin seat information of the target flight segment and the saleable cabin seat information of the target flight segment of the changed aircraft type;

if a quantity of unchecked-in independent passengers in the overloaded main cabin is greater than or equal to the single-cabin overflowed people quantity, determining the overflowed passengers who need to be reallocated with the cabin seats from the unchecked-in independent passengers;

if the quantity of unchecked-in independent passengers in the overloaded main cabin is less than the single-cabin overflowed people quantity, determining the overflowed passengers who need to be reallocated with the cabin seats from preset high-class passengers and the unchecked-in independent passengers, where the preset high-class passengers include group passengers and checked-in passengers.

In an embodiment, the determining the overflowed passengers who need to be reallocated with the cabin seats from the unchecked-in independent passengers includes:

if a class downgrading method is adopted to allocate cabin seats for the overflowed passengers,

ranking the unchecked-in independent passengers in the overloaded main cabin from low to high according to the preset passenger priority; and

determining first N unchecked-in independent passengers as the overflowed passengers who need to be reallocated with the cabin seats, where N is the single-cabin overflowed people quantity;

if a class upgrading method is adopted to allocate cabin seats for the overflowed passengers,

ranking the unchecked-in independent passengers in the overloaded main cabin from high to low according to the preset passenger priority; and

determining the first N unchecked-in independent passengers as the overflowed passengers who need to be reallocated with the cabin seats.

In an embodiment, the determining the overflowed passengers who need to be reallocated with the cabin seats from the preset high-class passengers and the unchecked-in independent passengers includes:

determining a quantity of overflowed passengers with a preset high class from the single-cabin overflowed people quantity;

if a class downgrading method is adopted to allocate cabin seats for the overflowed passengers,

ranking preset high-class passengers in the overloaded main cabin from low to high according to the preset passenger priority;

determining first M preset high-class passengers and all the unchecked-in independent passengers as the overflowed passengers who need to be reallocated with the cabin seats, where M is a quantity of overflowed people among checked-in independent passengers;

if a class upgrading method is adopted to allocate cabin seats for the overflowed passengers,

ranking the preset high-class passengers in the overloaded main cabin from high to low according to the preset passenger priority;

determining the first M preset high-class passengers and all the unchecked-in independent passengers as the overflowed passengers who need to be reallocated with the cabin seats.

In a second aspect, a resource allocation apparatus for flight cabin seats is provided according to the present disclosure, and the apparatus includes:

an acquisition unit, configured to acquire preset startup information and passenger name record PNR information of a target flight, where the preset startup information at least includes an aircraft-type change EQT message of the target flight, the EQT message at least includes saleable cabin seat information of each flight segment of a changed aircraft type, and the PNR information at least includes sold cabin seat information of each flight segment of the target flight;

a target flight segment determination unit, configured to determine a target flight segment according to a preset flight segment priority;

an overflow state determination unit, configured to compare sold cabin seat information of the target flight segment with saleable cabin seat information of the target flight segment of the changed aircraft type, to determine an overflow state of the target flight segment;

an overflowed passenger determination unit, configured to, if the target flight segment is in a state where a flight is not overloaded and a cabin is overloaded, determine overflowed passengers who are in an overloaded main cabin and need to be reallocated with cabin seats, according to a single-cabin overflowed people quantity in the overloaded main cabin and a passenger check-in state of the overloaded main cabin; and

an allocation unit, configured to allocate corresponding target cabin seats to the overflowed passengers according to a preset cabin seat mapping rule, where the preset cabin seat mapping rule is formulated according to a preset passenger priority and classes of main cabins.

In an embodiment, the resource allocation apparatus for flight cabin seats according to the second aspect of the present disclosure further includes:

a calculation unit, configured to calculate a difference between a total quantity of sold cabin seats in the target flight segment and a quantity of saleable cabin seats in the target flight segment of the changed aircraft type, to acquire a quantity of people overflowed in the flight segment;

an unchecked-in independent passenger determination unit, configured to determine a quantity of unchecked-in independent passengers in the target flight segment according to the PNR information; and

a first allocation unit, configured to, if the quantity of unchecked-in independent passengers is greater than or equal to the quantity of people overflowed in the flight segment, rank the unchecked-in independent passengers from low to high according to the preset passenger priority, and allocate first L unchecked-in independent passengers to a candidate flight, so that the target flight segment is in the state where the flight is not overloaded and the cabin is overloaded, where L is the quantity of people overflowed in the flight segment.

In an embodiment, the resource allocation apparatus for flight cabin seats according to the second aspect of the present disclosure further includes:

a second allocation unit, configured to allocate all the unchecked-in independent passengers to the candidate flight.

In an embodiment, when the overflowed passenger determination unit is configured to determine the overflowed passengers who are in the overloaded main cabin and need to be reallocated with cabin seats, according to the single-cabin overflowed people quantity in the overloaded main cabin and the passenger check-in state of the overloaded main cabin, the overflowed passenger determination unit is configured to:

determine the single-cabin overflowed people quantity of the overloaded main cabin, according to the sold cabin seat information of the target flight segment and the saleable cabin seat information of the target flight segment of the changed aircraft type;

if a quantity of unchecked-in independent passengers in the overloaded main cabin is greater than or equal to the single-cabin overflowed people quantity, determine the overflowed passengers who need to be reallocated with the cabin seats from the unchecked-in independent passengers;

if the quantity of unchecked-in independent passengers in the overloaded main cabin is less than the single-cabin overflowed people quantity, determine the overflowed passengers who need to be reallocated with the cabin seats from preset high-class passengers and the unchecked-in independent passengers, where the preset high-class passengers include group passengers and checked-in passengers.

Based on the above technical solutions provided by the resource allocation method and apparatus for flight cabin seats according to the present disclosure, after the preset startup information and the PNR information of the target flight are acquired, the target flight segment is first determined according to the preset flight segment priority, then the sold cabin seat information of the target flight segment is compared with the saleable cabin seat information of the target flight segment of the changed aircraft type to determine the overflow state of the target flight segment. If the target flight segment is in a state where the flight is not overloaded and the cabin is overloaded, for each overloaded main cabin, the overflowed passengers who need to be reallocated with cabin seats are determined according to the single-cabin overflowed people quantity and the passenger check-in state of the overloaded main cabin, and corresponding target cabin seats are allocated to the overflowed passengers according to the preset cabin seat mapping rule. Therefore, in case of passenger overflow, the technical solutions provided according to the present disclosure can allocate flight cabin seat resource more reasonably, adjust cabin seats corresponding to passengers, and minimize the impact of the aircraft type change on passengers.

## BRIEF DESCRIPTION OF THE DRAWINGS

For more clearly illustrating technical solutions in embodiments of the present disclosure or in the conventional technology, drawings to be used in the description of the embodiments or the conventional technology will be briefly described hereinafter. Apparently, drawings in the following description are only some examples of the present disclosure, and other drawings may be obtained by the ordinary skilled in the art based on the provided drawings without any creative efforts.

Figure 1 is a flowchart of a resource allocation method for flight cabin seats according to an embodiment of the present disclosure;

Figure 2 is a structural block diagram of a resource allocation apparatus for flight cabin seats according to an embodiment of the present disclosure;

Figure 3 is a structural block diagram of a resource allocation apparatus for flight cabin seats according to another embodiment of the present disclosure; and

Figure 4 is a structural block diagram of a resource allocation apparatus for flight cabin seats according to a yet another embodiment of the present disclosure.

## DETAILED DESCRIPTION OF THE EMBODIMENTS

In order to make the objectives, technical solutions and advantages of the embodiments of the present disclosure clearer, the technical solutions according to the embodiments of the present disclosure will be described clearly and completely as follows in conjunction with drawings in the embodiments of the present disclosure. It is apparent that the described embodiments are only a part of embodiments of the present disclosure, rather than all the embodiments.

Based on the embodiments of the present disclosure, all other embodiments obtained by those ordinary skilled in the art without creative efforts shall fall within the protection scope of the present disclosure.

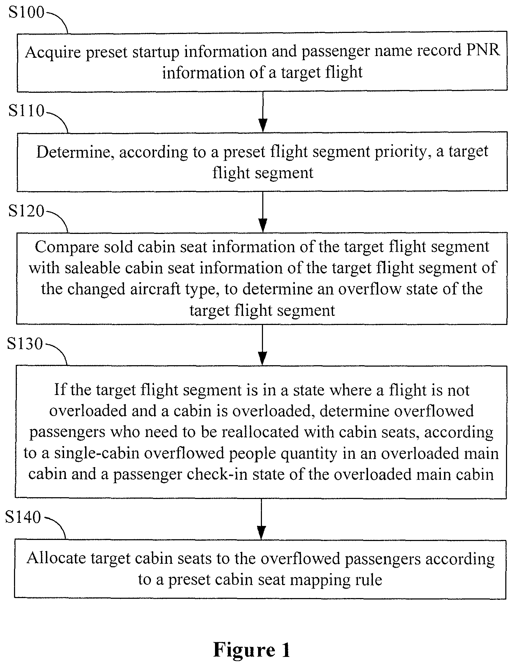

Reference is made to Figure 1, which is a flowchart of a resource allocation method for flight cabin seats according to an embodiment of the present disclosure. The method may be applied to an electronic device, such as a laptop, a smart phone, a PC (personal computer) that can obtain the required data and performs data processing on the obtained data according to the method provided by the embodiments of the present disclosure. Obviously, in some cases, the electronic device may also be implemented as a server on a network side. Referring to Figure 1, the resource allocation method for flight cabin seats according to an embodiment of the present disclosure may include following steps S100 to S140.

In step SI00, preset startup information and passenger name record PNR information of a target flight are acquired.

When the aircraft type of the flight is changed, there will be two situations of passenger overflow. One of the situations is that the quantity of saleable cabin seats on the target flight is decreased when the aircraft type of the flight is changed. For example, when the aircraft type of the target flight is changed, the aircraft type of the flight changes from Boeing 737 to Boeing 320, and then the quantity of saleable cabin seats changes from F10Y200 to F8Y190. The other situation is that the quantity of cabin seats in each main cabin or an arrangement of main cabins of the target flight changes when the aircraft type of the flight is changed. For example, the quantity of cabins changes from three to two after the aircraft type is changed. Apparently, there may be other overflow situations that occur in an actual application.

Different airlines generally have different requirements for when to determine whether there is passenger overflow. Therefore, the specific content of the preset startup information will also be different. The resource allocation method for flight cabin seats provided according to an embodiment of the present disclosure may determine whether there is passenger overflow in two cases, thus to allocate the cabin seat resource of the target flight.

One of the two cases is that the electronic device applying the method according to the embodiment of the present disclosure receives an aircraft-type change EQT (equipment) message. The EQT message at least includes saleable cabin seat information of each flight segment of the changed aircraft type. Specifically, the EQT message includes the total quantity of saleable cabin seats for each flight segment and the quantity of saleable cabin seats of each main cabin for each flight segment. Apparently, the EQT message may further include other necessary information about the changed aircraft type, which will not be described herein. When the EQT message is received by the electronic device, it means that the aircraft type of the target flight has been changed, and the step of determining whether there is passenger overflow may be started.

The EQT message is issued by a flight planning system of an airline, and the EQT message at least includes the new aircraft type adopted after the change. Furthermore, after the changed aircraft type is acquired, the total quantity of saleable cabin seats of the changed aircraft type and the quantity of saleable cabin seats corresponding to the main cabin of each class may be specifically acquired.

The other one of the two cases is that the electronic device applying the method according to the embodiment of the present disclosure receives passenger value information of the target flight sent by the airline. In the conventional technology, some airlines have their own control logic, and the step of determining whether there is passenger overflow may be started only when the passenger value information of the target flight is generated. In this scenario, it is determined whether there is passenger overflow only when the passenger value information sent by the airline is received. Otherwise, even if the EQT message has been received, the determining of whether there is passenger overflow cannot be performed. Therefore, the preset startup information described in the embodiment of the present disclosure at least includes the EQT message.

In an embodiment of the present disclosure, the passenger value of the target flight may be directly acquired from an airline. After establishing a communication connection with the airline, the passenger value of each passenger on the target flight may be acquired from the airline by executing the following exemplary codes.

```
{ "ackId": "214021402140",
        "msgID": {
        "msgDate": "2018-05-23",
        "msgSerialNbr": "23MAY18000E001"},
        "preSegmentPlans": [{
        "planReason": "NOREASON",
        "srcSegment": {
        "fltNum": "B201A",
        "airportPair": "CTUNRT",
        "fltDate": "2018-05-24" },
        "tarSegAssignment": null,
        "passengerInfo": {
        "N23FER/P1": {
```

```
        "oriCabin": "Y",
        "pnrValues": [{
        "valueType": "PNR_VALUE",
        "valuation": 80} ]},
        "N87OI9/P1": {
        "oriCabin": "Y",
    "pnrValues": [{
        "valueType": "PNR_VALUE",
        "valuation": 65} ] }
        }
        }
    ],
    "timestamp": "2018-05-23T07:30:00"}
```

Further, a method for calculating the passenger value is provided according to an embodiment of the present disclosure.

Firstly, passengers are grouped. Specifically, passengers are grouped according to an attribute such as whether the passenger is a group passenger, a check-in state (checked-in or unchecked-in), and a special setting. It should be noted that the passenger grouping rule may be specifically set with pertinence and personalization according to the needs of different airlines. Hereinafter, airline A and airline B are taken as examples to briefly introduce the passenger grouping method.

For airline A, the passenger check-in state is a main grouping basis. For passengers in a same main cabin, PNR is taken as a unit, and one PNR includes two or more passengers. If at least one passenger has checked in, it is considered that all passengers included in the PNR have already checked in and are grouped into the checked-in group. Accordingly, only when all passengers in the PNR have not checked in, the PNR is grouped into the unchecked-in group.

For airline B, group passengers are first grouped into one group, and the rest passengers are grouped according to the check-in states of independent passengers. The checked-in independent passengers are grouped into one group, and the unchecked-in independent passengers are grouped into another group. Specifically, when multiple passengers are included in a same PNR, if there is at least one passenger who has checked in, it is considered that all passengers in the entire PNR have been checked in, and they are grouped into the checked-in independent passenger group. Only when all passengers in the entire PNR have not checked in, it is considered that the passengers in the entire PNR have not checked in.

Further, it may also set the preset priorities of passengers of different groups in a protection process. For example, group passengers have the highest priority, checked-in independent passengers have the middle priority, and unchecked-in independent passengers have the lowest priority. It should be noted that group passengers and checked-in independent passengers are given priority to protection by changing cabin seats on this flight. For unchecked-in independent passengers, they may be protected to other flights. Apparently, protection may also be performed in other priority order. It is further conceivable that the protection way for group passengers and checked-in independent passengers may also be selected according to an actual need of the airline, such as allowing group passengers or checked-in independent passengers to be allocated to other flights.

It should be noted that the grouping of passengers may be used as an important reference item in the process of calculating the passenger value. If the passenger value is represented by a specific numerical value, the greater the numerical value, the greater the passenger value, and then the grouping state of the passenger, or the group to which the passenger belongs will directly affect the calculated passenger value. Furthermore, the group (group passenger, checked-in independent passenger, and unchecked-in independent passenger) to which the passenger belongs will also play an important role in the subsequent determination process of overflowed passengers.

After the passenger is grouped, a certain value mark is given to the passenger according to an attribute such as the frequent flyer card level, characteristic identity, special service, cabin seat of the passenger. For example, the value mark may be a specific numeral.

Airline A is still taken as an example to illustrate the method for calculating the passenger value:

$$\text{team score within 72 hours} = \text{own value} + 5001 \text{ (no differentiation is made on checked-in state temporarily here)}$$

$$\text{checked-in independent passenger} = \text{own value} + 2000$$

$$\text{team unchecked-in score over 72 hours} = \text{own value}$$

$$\text{team checked-in score over 72 hours} = \text{own value} + 2000$$

Based on the above calculation method, reference is made to Table 1 which shows a reference example for calculating the passenger value.

Table 1

| Order | Historical value | Value score | GUI display | Remark | Order | Current value | Value score | GUI display | Remark |
|---|---|---|---|---|---|---|---|---|---|
| 1 | GRP( Group passenger ) | 5001 | 72-hour team | | | | | | |
| 2 | VVIP and attendant | 5000 | VVIP | | | | | | |
| 3 | VIP and attendant | 4000 | VIP | | | | | | |
| 4 | Deportee/ Inadmissible passenger | 3000 | DEPU, DEPA/ INAD | | | | | | |
| 5 | Major disease patient ( MEDA ) | 2800 | MEDA | | | | | | |
| 6 | Customer needs wheel chair when boarding and on board ( WCHC, WCHS ) | 950 | WCHC, WCHS | | | | | | |
| 7 | Customer needs breathing machine (PP OC) | 950 | PPOC | | | | | | |
| 8 | Customer needs wheel chair on the ground(WC HR) | 500 | WCHR | | | | | | |
| | | | | | 9 | Deluxe first class | 300 | P | |
| 10 | Platinum card for life | 290 | CIP | | | | | | |
| 11 | Platinum card | 240 | CIP | | | | | | |
| 12 | Checked-in passenger | 200 | | | | | | | |
| 13 | Gold card | 100 | CIP | | | | | | |
| 14 | Gold card passenger from other members of star alliance | 50 | | | | | | | |
| 15 | Silver card | 200 | | | | | | | |
| | | | | | 16 | First class F | 45 | | |

It is conceivable that the above method for calculating the passenger value involves a large quantity of passenger flight records, passenger consumption records and other information. This historical information is all obtained by the computer or other devices executing the method through accessing corresponding information storage. The content stored in the information storage is also recorded by the airline using the corresponding information collection device and information sorting device. Moreover, collecting and processing of information is completed by a processor executing a preset control program.

Further, in order to complete the determination process, it is also necessary to acquire the passenger name record PNR information of the target flight. The PNR information at least includes information about the sold cabin seats of each flight segment of the target flight, that is, each PNR records the corresponding sold cabin seats. In a case that a passenger has not checked in, the PNR records a class of a main cabin of a cabin seat purchased by the passenger. Sales situation of the main cabin of each class of the target flight may be clearly known through summary statistics according to the PNR information. Apparently, various kinds of information such as passenger name, flight segment group, fare group, and fare calculation group may further be acquired, which will not be described herein.

In step S110, a target flight segment is determined according to a preset flight segment priority.

For a target flight that includes at least two flight segments, after the above information is acquired, it is necessary to determine the target flight segment which is to be processed first. The inventor's research found that passengers with long flight segments generally bring more benefits to airlines. Therefore, when the target flight includes multiple flight segments and includes long flight segments, passengers with long flight segments are given priority for the allocation of cabin seat resource. That is, in the preset priority rule, the long flight segment has the highest priority. If the target flight does not include the long flight segment, but includes multiple short flight segments, passengers of each of short flight segments in turn may be allocated with cabin seat resource, that is, each of short flight segments in turn is regarded as the target flight segment. Correspondingly, if the target flight has a single flight segment, the single flight segment may be directly regarded as the target flight segment.

A target flight including three flight segments is taken as an example as follows to illustrate possible changes. Among them, a, b, and c respectively represent terminals of the target flight, and a-b represents the corresponding flight segment from terminal a to terminal b. The representation of other flight segment is the same as the above, and will not be described. Specifically, the possible changes may be divided into following scenarios:

in the first scenario,
aircraft type changes in a-b-c segments.
in the second scenario,
EQT and time change occurs in a-b-c segments at the same time.
in the third scenario,
aircraft type changes in a-b segment, time changes in b-c segment, aircraft type changes/time changes in a-c segment.
in the fourth scenario
aircraft type changes in a-b segment, flight is cancelled in b-c segment, flight is cancelled in a-c segment (terminal a or terminal c is cancelled).
in the fifth scenario,
terminal b is cancelled in a-b-c segments, aircraft type changes in a-c segment, flight is cancelled in a-b and b-c segments.
in the sixth scenario,
new terminal c is added, aircraft type changes in a-b segment, a-c and b-c are new flight segments.
in the seventh scenario,
new terminal b is added between a-c segment, a-b is a new flight segment, b-c is a new flight segment, and aircraft type changes in a-c segment.

It should be noted that the priority of each flight segment may be set as needed. For example, for a target flight that includes multiple flight segments, passengers with a short segment may be also given priority for allocation of cabin seat resource. After overflowed passengers with a short flight segment are properly allocated, overflowed passengers with a long flight segment may be allocated.

In an embodiment, the preset priority of the flight segment may be preset in a program code. When a computer or other device that performs the method runs the corresponding code, the target flight segment may be directly selected according to the preset priority. Apparently, it may also be set to acquire a designated flight segment or designated priority entered by a user (an airline), and after the corresponding parameter is acquired, the target flight segment may be determined according to the acquired parameter.

In step S120, sold cabin seat information of the target flight is compared with saleable cabin seat information of the target flight of the changed aircraft type, to determine an overflow state of the target flight segment.

After the target flight segment that needs to be processed is determined, it is necessary to further determine the overflow state of the target flight segment. As mentioned above, the overflow state of the target flight segment may be determined according to a specific overflow situation of the target flight segment.

As an example, a single flight segment is regarded as the target flight segment. After the EQT message and corresponding PNR information of the target flight are acquired, the sold cabin seat information of the target flight segment and the saleable cabin seat information of the target flight segment of the changed aircraft type may be extracted. Specifically, the sold cabin seat information includes the total quantity of sold cabin seats and the quantity of sold cabin seats in a main cabin of each class. Moreover, the sum of the quantities of sold cabin seats in main cabins of all classes is equal to the total quantity of the sold cabin seats. The saleable cabin seat information includes the total quantity of saleable cabin seats of the target flight segment of the changed aircraft type, and the quantity of saleable cabin seats of a main cabin of each class. Moreover, the sum of the quantities of saleable cabin seats of main cabins of all classes is equal to the total quantity of saleable cabin seats.

After the above information is acquired, firstly, the total quantity of sold cabin seats of the target flight is compared with the total quantity of saleable cabin seats of the changed aircraft type. If the total quantity of the sold cabin seats is greater than the total quantity of the saleable cabin seats, it means that the flight is overloaded, and it is determined that the target flight segment is in a state where the flight is overloaded and the cabin is overloaded.

If the total quantity of sold cabin seats of the target flight segment is not greater than the total quantity of saleable cabin seats of the changed aircraft type, it is necessary to further compare the quantity of sold cabin seats of the main cabin of each class of the target flight segment with the quantity of saleable cabin seats corresponding to each class of the changed aircraft type. If the quantity of sold cabin seats of a main cabin of any class is greater than the quantity of saleable cabin seats of the main cabin of that class, it is determined that the target flight segment is in a state where the flight is not overloaded and the cabin is overloaded.

In an embodiment, in a case that the target flight segment is a long flight segment, it is necessary to further combine situations of other short flight segments to determine the overflow state of the target flight segment.

First of all, it is necessary to sequentially determine how many short flight segments are involved in the passenger overflow of the target flight, which is specifically divided into two cases.

In the first case, two short flight segments are both involved in the passenger overflow of the target flight. In this case, it is determined separately for each short flight segment, whether unchecked-in independent passengers that can be removed are more than or equal to unchecked-in independent passengers overflowed from the short flight segment itself.

If both of the two short flight segments can meet a condition that the unchecked-in independent passengers that can be removed are more than or equal to the unchecked-in independent passengers overflowed from the short flight segment itself, it is determined that the target flight segment (i.e., the long flight segment) is in the state where the flight is not overloaded and the cabin is overloaded. After the cabin seat resource of the target flight has been allocated, the two short flight segments will be processed according to the state where the flight is overloaded and the cabin is overloaded.

If in the two short flight segments, one of the two short flight segments meets the above condition that the unchecked-in independent passengers that can be removed are more than or equal to the unchecked-in independent passengers overflowed from the short flight segment itself, and the other one of the two short flight segments does not meet the above condition, it is determined that the target flight segment is in the state where the flight is overloaded and the cabin is overloaded. It is determined that the short flight segment that meets the above condition that the unchecked-in independent passengers that can be removed are more than or equal to the unchecked-in independent passengers overflowed from the short flight segment itself is in the state where the flight is not overloaded and the cabin is overloaded, and determined that the short flight segment that meets the above condition is in the state where the flight is overloaded and the cabin is overloaded.

In the second case, if there is only one short flight segment involved in the passenger overflow of the target flight, it is only necessary to make a determination on the short flight segment involved in the passenger overflow of the target flight. If the quantity of unchecked-in independent passengers that can be removed in this short flight segment is greater than or equal to the quantity of unchecked-in independent passengers overflowed from the short flight segment itself, it is determined that the target flight segment (i.e., the long flight segment) is in the state where the flight is not overloaded and the cabin is overloaded. After the long flight segment has been allocated with cabin seat resource, the short flight segment is allocated with cabin seat resource according to the state where the flight is overloaded and the cabin is overloaded. If the quantity of unchecked-in independent passengers that can be removed in this short flight segment is less than the quantity of unchecked-in independent passengers overflowed from the short flight segment itself, it is determined that the target flight segment (i.e., the long flight segment) is in the state where the flight is overloaded and the cabin is overloaded. After the long flight segment has been allocated with cabin seat resource, the short flight segment where overflow occurs will be allocated with cabin seat resource according to the state where the flight is overloaded and the cabin is overloaded, and the short flight segment where overflow does not occur will be allocated with cabin seat resource according to the state where the flight is not overloaded and the cabin is overloaded.

In an embodiment, when airlines sell tickets, a certain overbooking rate is generally set, that is, it is allowable to oversell some tickets over the total quantity of saleable cabin seats on the flight. The setting of the overbooking rate will affect the determination on whether there is passenger overflow on the target flight, the determination of the overflow type of the target flight segment, and the subsequent cabin seat allocation. In a specific operation process of determining the quantity of overflowed people of the flight and the quantity of cabin seats that can be oversold in the flight, a flight-level overbooking rate and a cabin-level overbooking rate may be set according to individual needs of the airline, such as flight attributes (e.g., typical flight, last flight, etc.), flight plan types (SSM, ASM, etc.), whether to consider important passengers, calculation standards (CAP, MAX), etc. In an allocation process of specific cabin seat resource, priority is given to ensuring that the flight is not overbooked, and then the overbooking rate of each main cabin will be specifically considered.

It is assumed that a certain flight layout is F10Y200 which means 10 cabin seats in the first class and 200 cabin seats in the economy class, it is set as the following: the calculation standard is MAX, the flight-level overbooking rate is 10%, the cabin F is not allowed to be oversold, the overbooking rate of cabin Y is 10%, and the MAX value of each cabin in the obtained flight information is F10Y220. First, the flight-level overbooking quantity is: 212*10%=21.2, rounded up to 21. If the flight is not overbooked, the allowable overbooking quantity of cabin Y is: 202*10%=20.2, rounded up to 20.

In an embodiment, reference is made to Table 2, which exemplarily gives an optional formulation rule of the overbooking rate.

Table 2

| Overbooking rate name | Protection way | Special passenger | Attribute of original flight segment | Calculation basis | Overbooking rate of entire flight | Overbooking rate of special cabin | Remarks |
|---|---|---|---|---|---|---|---|
| | | | Typical | MAX | 5% | P0%;F0%,J0%, Y5% | |
| Default overbooking rate of airline | Entire flight | N/A | Last | MAX | 0% | P0%;F0%,J0%, G0%, Y0% | Rules of Airline A |
| | | | Unique | MAX | 0% | P0%;F0%,J0%, G0%, Y0% | |
| | Entire flight | VVIP | Not considered | MAX | 0% | ALL0% | |

Among them, the letters P, F, J, Y represent abbreviations of main cabins, and each airline has its own definition, which will not be described herein;

MAX indicates the maximum quantity of saleable cabin seats of each main cabin of the flight allowed by the airline.

It should be noted that, in a case that overbooking is allowed by the airline, in the resource allocation method for cabin seats provided according to the embodiments of the present disclosure, the quantity of saleable cabin seats refers to the quantity of saleable cabin seats calculated with the overbooking rate, rather than the quantity of saleable physical cabin seats actually set on the flight. In a case that overbooking is not allowed, the quantity of saleable cabin seats described in the embodiments of the present disclosure refers to the quantity of saleable physical cabin seats actually set on the flight.

In step S130, if the target flight segment is in a state where the flight is not overloaded and the cabin is overloaded, overflowed passengers who need to be reallocated with cabin seats are determined according to a single-cabin overflowed people quantity in the overloaded main cabin and a passenger check-in state of the overloaded main cabin.

If the target flight segment is in the state where the flight is not overloaded and the cabin is overloaded, it is necessary to determine, for the main cabin where passenger overflow occurs, passengers who need to reallocate with cabin seats, so that the main cabin is no longer overloaded. If there are multiple overloaded main cabins in the target flight segment, the main cabins will be dealt with one by one in an order of main cabin class from high to low, until the overflowed passengers in each overloaded main cabin have been allocated to corresponding cabin seats, thus to achieve reasonable allocation of the cabin seat resource. Apparently, it is also possible to allocate cabin seat resource for each main cabin one by one in the order of the main cabin class from low to high or other preset order, which fall within the protection scope of the embodiments of the present disclosure without going beyond the core idea of the embodiments of the present disclosure.

In an embodiment, for the overloaded main cabin, the sold seat cabin information of the target flight segment and the saleable cabin seat information of the target flight segment of the changed aircraft type are acquired. The sold seat cabin information of the target flight segment specifically refers to the total quantity of the sold cabin seats of the target flight segment, and the saleable cabin seat information of the target flight segment of the changed aircraft type specifically refers to the total quantity of the saleable cabin seats of the target flight segment. A difference between the total quantity of the sold cabin seats and the total quantity of the saleable cabin seats is calculated, and the calculated result is the single-cabin overflowed people quantity of the overloaded main cabin.

After the single-cabin overflowed people quantity is calculated, it is necessary to further compare the quantity of unchecked-in independent passengers in the overloaded main cabin with the single-cabin overflowed people quantity, so as to determine which part of passengers needs to be reallocated with cabin seat resource.

Specifically, if the quantity of unchecked-in independent passengers in the overloaded main cabin is greater than or equal to the single-cabin overflowed people quantity, it means that removing part or all of the unchecked-in independent passengers can ensure that the main cabin will be no longer overloaded. The overflowed passengers who need to be reallocated with cabin seats are screened out from the unchecked-in independent passengers, while the checked-in independent passengers and group passengers in the main cabin will remain in the main cabin.

In an embodiment, in a case that removing part or all of the unchecked-in independent passengers can ensure that the main cabin will be no longer overloaded, for removing which passengers and reallocating cabin seat resource for these removed passengers, there will be two cases according to different protection methods.

In the first case, a class downgrading method is adopted to allocate cabin seats for the overflowed passengers. For example, passengers in the first class are reallocated to the business class or the super economy class. Firstly, the unchecked-in independent passengers in the overloaded main cabin are ranked from low to high according to the preset passenger priority, after the ranking is accomplished, the first N unchecked-in independent passengers are determined as the overflowed passengers who need to be reallocated with cabin seats, where N is the single-cabin overflowed people quantity. In an embodiment, the preset passenger priority may be formulated according to the passenger value described above, or the passenger value may be directly served as the priority in allocation of the cabin seat resource for the passenger.

In the second case, a class upgrading method is adopted to allocate cabin seats for the overflowed passengers. For example, passengers in the economy class are reallocated to the business class or the first class, and reallocated with cabin seat resource in the business class or the first class. Firstly, the unchecked-in independent passengers in the overloaded main cabin are ranked from high to low according to the preset passenger priority, after the ranking is accomplished, the first N unchecked-in independent passengers are determined as the overflowed passengers who need to be reallocated with cabin seats. As mentioned above, N is the single-cabin overflowed people quantity.

Conversely, if the quantity of unchecked-in independent passengers in the overloaded main cabin is less than the single-cabin overflowed people quantity, it means that removing all unchecked-in independent passengers still cannot make the main cabin no longer overloaded, and it is required to remove part of preset high-class passengers to make the main cabin no longer overloaded. As described above, in a case that passengers are divided into group passengers, checked-in independent passengers and unchecked-in independent passengers, the preset high-class passengers in the embodiment of the present disclosure include group passengers and checked-in independent passengers. Furthermore, the level of group passengers is higher than that of the checked-in independent passengers. That is, when removing the unchecked-in independent passengers cannot make the main cabin no longer overloaded, it is considered to remove the checked-in independent passengers. Only in a case that removing the checked-in independent passengers and unchecked-in independent passengers still cannot make the main cabin no longer overloaded, part of group passengers will be removed to make the main cabin no longer overloaded.

It should be noted that the designation of the above preset high-class passengers is a different concept from the above preset passenger priority. The preset high-class passengers are designated according to the group to which passengers belong, and cabin seats of the preset high-class passengers are lastly adjusted in a case of passenger overflow. Furthermore, the designated preset high-class passengers are also passengers who can generate more and stable benefits for the airline.

In an embodiment, the overflowed passengers who need to be reallocated with cabin seats are determined from the preset high-class passengers and unchecked-in passengers, which is different from the above case that part or all of the unchecked-in independent passengers are removed to make the main cabin no longer overloaded. Before determining the overflowed passengers, it is first determined the quantity (represented as M in the embodiment) of overflowed passengers with a preset high class included in the single-cabin overflowed people quantity in the overloaded main cabin. Specifically, a difference between the single-cabin overflowed people quantity and the quantity of unchecked-in independent passengers in the main cabin is the quantity of overflowed passengers with the preset high class. After the quantity of overflowed passengers with the preset high class is calculated, there will be two cases according to different protection methods.

In the first case, a class downgrading method is adopted to allocate cabin seats for the overflowed passengers. Firstly, the preset high-class passengers in the overloaded main cabin are ranked from low to high according to the preset passenger priority. After the ranking is accomplished, the first M preset high-class passengers and all the unchecked-in independent passengers are determined as the overflowed passengers who need to be reallocated with cabin seats.

In the second case, a class upgrading method is adopted to allocate cabin seats for the overflowed passengers. Firstly, the preset high-class passengers in the overloaded main cabin are ranked from high to low according to the preset passenger priority. After the ranking is accomplished, the first M preset high-class passengers and all the unchecked-in independent passengers are determined as the overflowed passengers who need to be reallocated with cabin seats.

As described above, if only removing part or all of the checked-in independent passengers and all unchecked-in independent passengers can make the main cabin no longer overloaded, no adjustment will be made to group passengers. Only when removing all the checked-in independent passengers and all unchecked-in independent passengers still cannot make the main cabin no longer overloaded, it is considered to remove the group passengers.

If the target flight segment is in the state where the flight is overloaded and the cabin is overloaded, it is required to pre-process the target flight segment, so that the target flight segment is in the state where the flight is not overloaded and the cabin is overloaded, and then the overflowed passengers of the overloaded main cabin may be determined according to the above method steps.

Specifically, for the target flight segment in the state where the flight is overloaded and the cabin is overloaded, a difference between the total quantity of the sold cabin seats in the target flight segment and the quantity of the saleable cabin seats in the target flight segment of the changed aircraft type is first calculated to acquire the quantity of people overflowed in the flight segment. In an embodiment, the quantity of people overflowed in the flight segment is represented as L.

Subsequently, a computer or other electronic device applying the method provided according to the embodiments of the present disclosure extracts the passenger check-in state information from the obtained PNR, so as to determine the quantity of unchecked-in independent passengers in the target flight segment. The quantity of unchecked-in independent passengers is compared with the quantity of people overflowed in the flight segment. If the quantity of unchecked-in independent passengers is greater than or equal to the quantity of people overflowed in the flight segment, it means that allocating all or part of the unchecked-in independent passengers to a candidate flight (i.e., removing all or part of the unchecked-in independent passengers from the target flight and allocating them to the candidate flight) will make the target flight segment be in the state where the flight is not overloaded and the cabin is overloaded.

Further, all unchecked-in passengers in the target flight segment may be ranked from low to high according to the preset passenger priority, and the first L unchecked-in independent passengers may be allocated to the candidate flight. After the allocation is accomplished, it can be ensured that the target flight segment is in the state where the flight is not overloaded and the cabin is overloaded.

In an embodiment, if the quantity of unchecked-in independent passengers in the target flight segment is less than the quantity of overflowed passengers in the flight segment, it indicates that the preset high-class passengers overflow. In this case, only all unchecked-in independent passengers are allocated to the candidate flight. The group passengers and checked-in independent passengers will not be allocated to the candidate flight, but will stay on the target flight and will be processed manually. In a case that the candidate flight still cannot contain all the overflowed passengers, the rest passengers will be left in the original cabin seats of the target flight and will be processed manually.

In step S140, corresponding target cabin seats are allocated to the overflowed passengers according to a preset cabin seat mapping rule.

When the aircraft type of the target flight is changed to result in the passenger overflow, after the overflowed passengers are determined according to the above steps, a corresponding target cabin seat is allocated to each of the overflowed passengers according to the preset cabin seat mapping rule. In an embodiment, the preset cabin seat mapping rule is formulated according to the preset passenger priority and the class of each main cabin. The core idea of the preset cabin seat mapping rule is to allocate the overflowed passengers with a higher preset passenger priority to a main cabin with a higher class, and allocate the overflowed passengers with a lower preset passenger priority to a main cabin with a lower class. The benefits of the airline are maximized while providing passengers with flight arrangements that are suitable for their overall situations and improving the flying experience of passengers.

Based on the above steps, when allocating cabin seats to the overflowed passengers in the main cabin, the class upgrading method or class downgrading method will be adopted flexibly according to the actual sale situation of cabin seats. In a case that the single-cabin overflowed people quantity is large, the methods for determining the overflowed passengers in the two methods are combined to determine the overflowed passengers in the overloaded main cabin. When allocating cabin seats to the overflowed passengers according to the preset cabin seat mapping rule, it is also necessary to flexibly allocate target cabin seats to the overflowed passengers according to the selected protection method (class upgrading or class downgrading).

Airline A is taken as an example to illustrate an optional form of the preset cabin seat mapping rule. The target flight of airline A has four types of main cabins including the first class, the business class, the super economy class and the normal economy class in an order of the main cabin class from high to low. Specific cases are as follows.

Overload of the first class

When there is passenger overflow in the first class, only the class downgrading method can be adopted to allocate cabin seat resource. The overflowed passengers are ranked from high to low according to the preset passenger priority, and are subsequently allocated with cabin seats in the business class, in the super economy class and in the normal economy class.

Overload of the business class

When the class upgrading method is adopted to allocate cabin seat resource, the overflowed passengers may be allocated with first-class cabin seat resource.

When the class downgrading method is adopted to allocate cabin seat resource, the overflowed passengers are allocated with the cabin seat resource of the super economy class and the normal economy class in sequence according to the preset passenger priority from high to low.

Overload of super economy class

A combination of the class downgrading and class upgrading is adopted to allocate cabin seat resource to the overflowed passengers. For the overflowed passengers, the class downgrading method is firstly adopted to allocate cabin seat resource of the normal economy class, and the class upgrading method is then adopted to allocate cabin seat resource of the first class.

Overload of normal economy class

When the normal economy class is overloaded, only the class upgrading method can be adopted to allocate cabin seat resource. The cabin seat resource is allocated to the overflowed passengers according to an order of the main cabin class from low to high. As described above, the overflowed passengers should be ranked from low to high according to the preset passenger priority, and the corresponding cabin class should be ranked from low to high, so as to allocate cabin seat resource to each of the overflowed passengers.

In summary, with the resource allocation method for flight cabin seats provided according to the embodiments of the present disclosure, in case of passenger overflow, cabin seat resource of the flight can be allocated more reasonably, cabin seats corresponding to passengers can be adjusted, and the impact of the aircraft type change on passengers can be minimized, to improve the flying experience of passengers. Moreover, it is also beneficial to maximizing the benefit of the airline and increasing the profit margin of the airline.

In an embodiment, after the cabin seat resource of the target flight have been allocated according to the resource allocation method for flight cabin seats provided according to the embodiments of the present disclosure, if there are still passengers who cannot be protected by the target flight, the airline may personalize the destination of the remaining passengers as needed. For example, cabin seats will no longer be allocated to the remaining passengers, or corresponding passengers are allocated to other flights in accordance with the flight cancellation rule. For such cases, details will not be described in the embodiments of the present disclosure.

The resource allocation apparatus for flight cabin seats provided according to an embodiment of the present disclosure is described hereinafter. The resource allocation apparatus for flight cabin seats described below may be considered as a functional module architecture that needs to be set in a central device to implement the resource allocation method for flight cabin seats provided according to the embodiments of the present disclosure. The following description may be made reference to the above description.

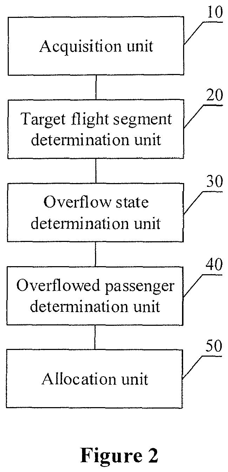

Figure 2 is a structural block diagram of a resource allocation apparatus for flight cabin seats according to an embodiment of the present disclosure. Referring to Figure 2, the apparatus may include an acquisition unit 10, a target flight segment determination unit 20, an overflow state determination unit 30, an overflowed passenger determination unit 40 and an allocation unit 50.

The acquisition unit 10 is configured to acquire preset startup information and passenger name record PNR information of a target flight. The preset startup information at least includes an aircraft-type change EQT message of the target flight. The EQT message at least includes saleable cabin seat information of each flight segment of a changed aircraft type, and the PNR information at least includes sold cabin seat information of each flight segment of the target flight.

The target flight segment determination unit 20 is configured to determine a target flight segment according to a preset flight segment priority.

The overflow state determination unit 30 is configured to compare sold cabin seat information of the target flight segment with saleable cabin seat information of the target flight segment of the changed aircraft type, to determine an overflow state of the target flight segment.

The overflowed passenger determination unit 40 is configured to, if the target flight segment is in a state where a flight is not overloaded and a cabin is overloaded, determine overflowed passengers who are in an overloaded main cabin and need to be reallocated with cabin seats, according to a single-cabin overflowed people quantity in the overloaded main cabin and a passenger check-in state of the overloaded main cabin.

The allocation unit 50 is configured to allocate corresponding target cabin seats to the overflowed passengers according to a preset cabin seat mapping rule. The preset cabin seat mapping rule is formulated according to a preset passenger priority and classes of main cabins.

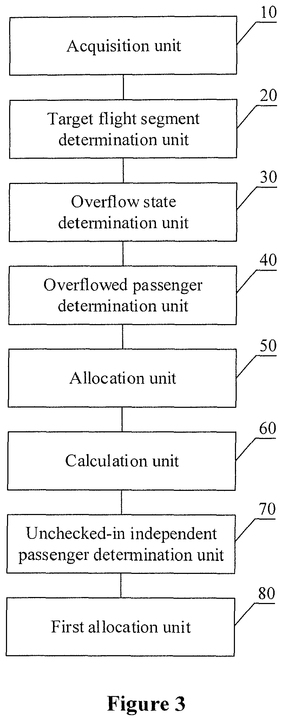

In an embodiment, reference is made to Figure 3, which is a structural block diagram of a resource allocation apparatus for flight cabin seats provided according to another embodiment of the present disclosure. On basis of the embodiment shown in Figure 2, the apparatus further includes a calculation unit 60, an unchecked-in independent passenger determination unit 70 and a first allocation unit 80.

The calculation unit 60 is configured to calculate a difference between a total quantity of sold cabin seats in the target flight segment and a quantity of saleable cabin seats in the target flight segment of the changed aircraft type, to acquire a quantity of people overflowed in the flight segment.

The unchecked-in independent passenger determination unit 70 is configured to determine a quantity of unchecked-in independent passengers in the target flight segment according to the PNR information.

The first allocation unit 80 is configured to, if the quantity of unchecked-in independent passengers is greater than or equal to the quantity of people overflowed in the flight segment, rank the unchecked-in independent passengers from low to high according to the preset passenger priority, and allocate first L unchecked-in independent passengers to a candidate flight, so that the target flight segment is in the state where the flight is not overloaded and the cabin is overloaded. L is the quantity of people overflowed in the flight segment.

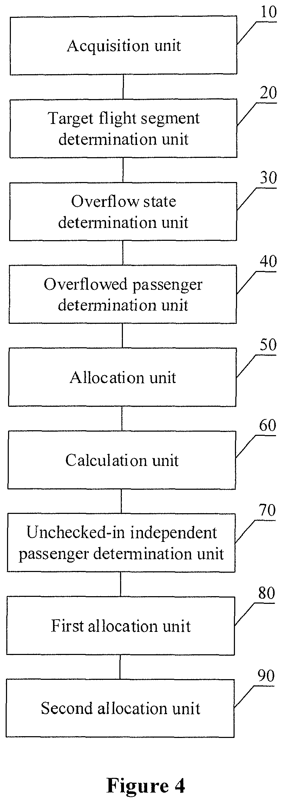

In an embodiment, reference is made to Figure 4, which is a structural block diagram of a resource allocation apparatus for flight cabin seats provided according to a yet another embodiment of the present disclosure. On basis of the embodiment shown in Figure 3, the apparatus further includes a second allocation unit 90.

The second allocation unit 90 is configured to allocate all the unchecked-in independent passengers to the candidate flight.

In an embodiment, when the overflowed passenger determination unit 40 is configured to determine the overflowed passengers who are in the overloaded main cabin and need to be reallocated with cabin seats, according to the single-cabin overflowed people quantity in the overloaded main cabin and the passenger check-in state of the overloaded main cabin, the overflowed passenger determination unit 40 is specifically configured to:

determine the single-cabin overflowed people quantity of the overloaded main cabin, according to the sold cabin seat information of the target flight segment and the saleable cabin seat information of the target flight segment of the changed aircraft type;

if a quantity of unchecked-in independent passengers in the overloaded main cabin is greater than or equal to the single-cabin overflowed people quantity, determine the overflowed passengers who need to be reallocated with the cabin seats from the unchecked-in independent passengers;

if the quantity of unchecked-in independent passengers in the overloaded main cabin is less than the single-cabin overflowed people quantity, determine the overflowed passengers who need to be reallocated with the cabin seats from preset high-class passengers and the unchecked-in independent passengers, where the preset high-class passengers include group passengers and checked-in passengers.

It may be further understood by those skilled in the art that units and algorithm steps described in combination with the disclosed embodiments herein may be implemented by electronic hardware, computer software or a combination thereof. In order to clearly describe interchangeability of hardware and software, compositions and steps of the examples are generally described above in accordance with functions. Whether these functions are performed in hardware or software depends on the specific application and design constraints for the technical solution. Those skilled in the art may implement the described functions using a different method for each specific application, and such implementation should not be considered to go beyond the scope of the present disclosure.

The steps of the method or the algorithm described in conjunction with the embodiments disclosed herein may be implemented directly by hardware, a software module executed by the processor, or a combination thereof. The software module may be stored in a random access memory (RAM), a memory, a read-only memory (ROM), an electrical programmable ROM, an electrically erasable programmable ROM, a register, a hardware disk, a removable magnetic disk, a CD-ROM, or any other forms of storage medium well known in the art.

The above illustration of the disclosed embodiments can enable those skilled in the art to implement or use the present disclosure. Various modifications to the embodiments are apparent to the person skilled in the art, and the general principle herein may be implemented in other embodiments without departing from the core spirit or scope of the present disclosure. Therefore, the present disclosure is not limited to the embodiments described herein, but should be in accordance with the broadest scope consistent with the principle and novel features disclosed herein.

**Claims**

1. A resource allocation method for flight cabin seats, comprising:

   acquiring preset startup information and passenger name record PNR information of a target flight, wherein the preset startup information at least comprises an aircraft-type change EQT message of the target flight, the EQT message at least comprises saleable cabin seat information of each flight segment of a changed aircraft type, and the PNR information at least comprises sold cabin seat information of each flight segment of the target flight;
   determining, according to a preset flight segment priority, a target flight segment;
   comparing sold cabin seat information of the target flight segment with saleable cabin seat information of the target flight segment of the changed aircraft type, to determine an overflow state of the target flight segment;
   if the target flight segment is in a state where a flight is not overloaded and a cabin is overloaded, determining overflowed passengers who are in an overloaded main cabin and need to be reallocated with cabin seats, according to a single-cabin overflowed people quantity in the overloaded main cabin and a passenger check-in state of the overloaded main cabin; and
   allocating corresponding target cabin seats to the overflowed passengers according to a preset cabin seat mapping rule, wherein the preset cabin seat mapping rule is formulated according to a preset passenger priority and classes of main cabins.

2. The resource allocation method for flight cabin seats according to claim 1, wherein if the target flight segment is in a state where the flight is overloaded and the cabin is overloaded, the method further comprises:

   calculating a difference between a total quantity of sold cabin seats in the target flight segment and a quantity of saleable cabin seats in the target flight segment of the changed aircraft type, to acquire a quantity of people overflowed in the flight segment;
   determining a quantity of unchecked-in independent passengers in the target flight segment according to the PNR information;
   if the quantity of unchecked-in independent passengers is greater than or equal to the quantity of people overflowed in the flight segment, ranking the unchecked-in independent passengers from low to high according to the preset passenger priority, and allocating first L unchecked-in independent passengers to a candidate flight, so that the target flight segment is in the state where the flight is not overloaded and the cabin is overloaded, wherein L is the quantity of people overflowed in the flight segment.

3. The resource allocation method for flight cabin seats according to claim 2, wherein if the quantity of the unchecked-in independent passengers is less than the quantity of people overflowed in the flight segment, the method further comprises:
allocating all the unchecked-in independent passengers to the candidate flight.

4. The resource allocation method for flight cabin seats according to claim 1, wherein the determining the overflowed passengers who are in the overloaded main cabin and need to be reallocated with the cabin seats, according to the single-cabin overflowed people quantity in the overloaded main cabin and the passenger check-in state of the overloaded main cabin comprises:

determining the single-cabin overflowed people quantity of the overloaded main cabin, according to the sold cabin seat information of the target flight segment and the saleable cabin seat information of the target flight segment of the changed aircraft type;
if a quantity of unchecked-in independent passengers in the overloaded main cabin is greater than or equal to the single-cabin overflowed people quantity, determining the overflowed passengers who need to be reallocated with the cabin seats from the unchecked-in independent passengers;
if the quantity of unchecked-in independent passengers in the overloaded main cabin is less than the single-cabin overflowed people quantity, determining the overflowed passengers who need to be reallocated with the cabin seats from preset high-class passengers and the unchecked-in independent passengers, wherein the preset high-class passengers comprise group passengers and checked-in passengers.

5. The resource allocation method for flight cabin seats according to claim 4, wherein the determining the overflowed passengers who need to be reallocated with the cabin seats from the unchecked-in independent passengers comprises:

if a class downgrading method is adopted to allocate cabin seats for the overflowed passengers,

ranking the unchecked-in independent passengers in the overloaded main cabin from low to high according to the preset passenger priority; and
determining first N unchecked-in independent passengers as the overflowed passengers who need to be reallocated with the cabin seats, wherein N is the single-cabin overflowed people quantity;

if a class upgrading method is adopted to allocate cabin seats for the overflowed passengers,

ranking the unchecked-in independent passengers in the overloaded main cabin from high to low according to the preset passenger priority; and
determining the first N unchecked-in independent passengers as the overflowed passengers who need to be reallocated with the cabin seats.

6. The resource allocation method for flight cabin seats according to claim 4, wherein the determining the overflowed passengers who need to be reallocated with the cabin seats from the preset high-class passengers and the unchecked-in independent passengers comprises:

determining a quantity of overflowed passengers with a preset high class from the single-cabin overflowed people quantity;
if a class downgrading method is adopted to allocate cabin seats for the overflowed passengers,

ranking preset high-class passengers in the overloaded main cabin from low to high according to the preset passenger priority;
determining first M preset high-class passengers and all the unchecked-in independent passengers as the overflowed passengers who need to be reallocated with the cabin seats, wherein M is a quantity of overflowed people among checked-in independent passengers;

if a class upgrading method is adopted to allocate cabin seats for the overflowed passengers,

ranking the preset high-class passengers in the overloaded main cabin from high to low according to the preset passenger priority;

determining the first M preset high-class passengers and all the unchecked-in independent passengers as the overflowed passengers who need to be reallocated with the cabin seats.

7. A resource allocation apparatus for flight cabin seats, comprising:

an acquisition unit, configured to acquire preset startup information and passenger name record PNR information of a target flight, wherein the preset startup information at least comprises an aircraft-type change EQT message of the target flight, the EQT message at least comprises saleable cabin seat information of each flight segment of a changed aircraft type, and the PNR information at least comprises sold cabin seat information of each flight segment of the target flight;

a target flight segment determination unit, configured to determine a target flight segment according to a preset flight segment priority;

an overflow state determination unit, configured to compare sold cabin seat information of the target flight segment with saleable cabin seat information of the target flight segment of the changed aircraft type, to determine an overflow state of the target flight segment;

an overflowed passenger determination unit, configured to, if the target flight segment is in a state where a flight is not overloaded and a cabin is overloaded, determine overflowed passengers who are in an overloaded main cabin and need to be reallocated with cabin seats, according to a single-cabin overflowed people quantity in the overloaded main cabin and a passenger check-in state of the overloaded main cabin; and

an allocation unit, configured to allocate corresponding target cabin seats to the overflowed passengers according to a preset cabin seat mapping rule, wherein the preset cabin seat mapping rule is formulated according to a preset passenger priority and classes of main cabins.

8. The resource allocation apparatus for flight cabin seats according to claim 7, further comprising:

a calculation unit, configured to calculate a difference between a total quantity of sold cabin seats in the target flight segment and a quantity of saleable cabin seats in the target flight segment of the changed aircraft type, to acquire a quantity of people overflowed in the flight segment;

an unchecked-in independent passenger determination unit, configured to determine a quantity of unchecked-in independent passengers in the target flight segment according to the PNR information; and

a first allocation unit, configured to, if the quantity of unchecked-in independent passengers is greater than or equal to the quantity of people overflowed in the flight segment, rank the unchecked-in independent passengers from low to high according to the preset passenger priority, and allocate first L unchecked-in independent passengers to a candidate flight, so that the target flight segment is in the state where the flight is not overloaded and the cabin is overloaded, wherein L is the quantity of people overflowed in the flight segment.

9. The resource allocation apparatus for flight cabin seats according to claim 8, further comprising:
a second allocation unit, configured to allocate all the unchecked-in independent passengers to the candidate flight.

10. The resource allocation apparatus for flight cabin seats according to claim 7, wherein when the overflowed passenger determination unit is configured to determine the overflowed passengers who are in the overloaded main cabin and need to be reallocated with cabin seats, according to the single-cabin overflowed people quantity in the overloaded main cabin and the passenger check-in state of the overloaded main cabin, the overflowed passenger determination unit is configured to:

determine the single-cabin overflowed people quantity of the overloaded main cabin, according to the sold cabin seat information of the target flight segment and the saleable cabin seat information of the target flight segment of the changed aircraft type;

if a quantity of unchecked-in independent passengers in the overloaded main cabin is greater than or equal to the single-cabin overflowed people quantity, determine the overflowed passengers who need to be reallocated with the cabin seats from the unchecked-in independent passengers;

if the quantity of unchecked-in independent passengers in the overloaded main cabin is less than the single-cabin overflowed people quantity, determine the overflowed passengers who need to be reallocated with the cabin seats from preset high-class passengers and the unchecked-in independent passengers, wherein the preset high-class passengers comprise group passengers and checked-in passengers.

S100

Acquire preset startup information and passenger name record PNR information of a target flight

S110

Determine, according to a preset flight segment priority, a target flight segment

S120

Compare sold cabin seat information of the target flight segment with saleable cabin seat information of the target flight segment of the changed aircraft type, to determine an overflow state of the target flight segment

S130

If the target flight segment is in a state where a flight is not overloaded and a cabin is overloaded, determine overflowed passengers who need to be reallocated with cabin seats, according to a single-cabin overflowed people quantity in an overloaded main cabin and a passenger check-in state of the overloaded main cabin

S140

Allocate target cabin seats to the overflowed passengers according to a preset cabin seat mapping rule

**Figure 1**

**Figure 2**

Acquisition unit — 10

Target flight segment determination unit — 20

Overflow state determination unit — 30

Overflowed passenger determination unit — 40

Allocation unit — 50

Calculation unit — 60

Unchecked-in independent passenger determination unit — 70

First allocation unit — 80

**Figure 3**

Figure 4

## INTERNATIONAL SEARCH REPORT

| International application No. |
| --- |
| **PCT/CN2020/100777** |

**A. CLASSIFICATION OF SUBJECT MATTER**

G06Q 10/06(2012.01)i; G06Q 50/30(2012.01)i

According to International Patent Classification (IPC) or to both national classification and IPC

**B. FIELDS SEARCHED**

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

CNPAT, WPI, EPODOC, ISI, CNKI: 航班, 航行, 飞机, 舱位, 座位, 坐席, 分配, 航段, 优先级, 变更, 机型, 销售, 主舱, 重新分配, 调整, 溢出, 人数, 排序, 旅客, 值机, 保护, flight, voyage, aircraft, shipping space, seat, allocation, segment, priority, change, model, sale, main cabin, reallocation, adjustment, overflow, number of people, sorting, passenger, check-in, protect, PNR, EQT

**C. DOCUMENTS CONSIDERED TO BE RELEVANT**

| Category* | Citation of document, with indication, where appropriate, of the relevant passages | Relevant to claim No. |
| --- | --- | --- |
| PX | CN 110334959 A (CHINA TRAVELSKY TECHNOLOGY LIMITED) 15 October 2019 (2019-10-15) <br> claims 1-10 | 1-10 |
| X | CN 105654181 A (CHINA TRAVELSKY TECHNOLOGY LIMITED) 08 June 2016 (2016-06-08) <br> description, paragraphs [0006]-[0053] and [0059]-[0089] | 1-10 |
| A | CN 102725768 A (AMADEUS S.A.S.) 10 October 2012 (2012-10-10) <br> entire document | 1-10 |
| A | CN 108470393 A (CIVIL AVIATION UNIVERSITY OF CHINA) 31 August 2018 (2018-08-31) <br> entire document | 1-10 |
| A | CN 105654312 A (TRAVELSKY TECHNOLOGY LIMITED) 08 June 2016 (2016-06-08) <br> entire document | 1-10 |
| A | US 2005278201 A1 (AMADUES S.A.S.) 15 December 2005 (2005-12-15) <br> entire document | 1-10 |

☐ Further documents are listed in the continuation of Box C.　☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **02 September 2020** | **28 September 2020** |

| Name and mailing address of the ISA/CN | Authorized officer |
| --- | --- |
| **China National Intellectual Property Administration (ISA/CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/100777**

| Patent document cited in search report | | | Publication date (day/month/year) | Patent family member(s) | | | Publication date (day/month/year) |
|---|---|---|---|---|---|---|---|
| CN | 110334959 | A | 15 October 2019 | None | | | |
| CN | 105654181 | A | 08 June 2016 | None | | | |
| CN | 102725768 | A | 10 October 2012 | WO | 2011042563 | A1 | 14 April 2011 |
| | | | | EP | 2323082 | A1 | 18 May 2011 |
| | | | | US | 2011087506 | A1 | 14 April 2011 |
| | | | | CA | 2782076 | A1 | 14 April 2011 |
| | | | | AU | 2010304977 | A1 | 24 May 2012 |
| | | | | IN | 201203007 | P1 | 31 July 2015 |
| CN | 108470393 | A | 31 August 2018 | None | | | |
| CN | 105654312 | A | 08 June 2016 | None | | | |
| US | 2005278201 | A1 | 15 December 2005 | FR | 2842626 | A1 | 23 January 2004 |
| | | | | WO | 2004010348 | A2 | 29 January 2004 |
| | | | | AU | 2003255700 | A1 | 09 February 2004 |
| | | | | NZ | 537856 | A | 31 May 2007 |

Form PCT/ISA/210 (patent family annex) (January 2015)

**EP 3 998 562 A1**

**REFERENCES CITED IN THE DESCRIPTION**

**Patent documents cited in the description**

- CN 201910620244